# EUROPÄISCHE PATENTSCHRIFT

(11) **EP 3 240 662 B1**
(45) Veröffentlichungstag und Bekanntmachung des Hinweises auf die Patenterteilung: **12.06.2019**
(21) Anmeldenummer: 15820530.2
(22) Anmeldetag: 23.12.2015
(51) Int. Cl.: B29B 15/12

(54) **VERFAHREN UND VORRICHTUNG ZUR HERSTELLUNG EINES FASERVERBUNDWERKSTOFFS**
METHOD AND DEVICE FOR PRODUCING A FIBROUS COMPOSITE COMPONENT
PROCÉDÉ ET DISPOSITIF DE FABRICATION D'UN MATÉRIAU COMPOSITE EN FIBRES

(30) Priorität: 29.12.2014 EP 14200411
(43) Veröffentlichungstag der Anmeldung: 08.11.2017
(73) Patentinhaber: Evonik Degussa GmbH, 45128 Essen (DE)
(72) Erfinder: BERLIN, Mark Reinhard, 45665 Recklinghausen (DE); SONDERMANN, Udo, 46286 Dorsten (DE)
(74) Vertreter: Evonik Patent Association
(86) Internationale Anmeldenummer: PCT/EP2015/081171
(87) Internationale Veröffentlichungsnummer: WO 2016/107808

(56) Entgegenhaltungen:
- WO-A1-2012/149129
- WO-A1-2014/140025

## Beschreibung

Gegenstand der Erfindung sind ein Verfahren zur Herstellung von Verbundwerkstoffen sowie eine Vorrichtung, mit der ein oder mehrere Faserbündel mit einer Schmelze imprägniert werden können. Durch den speziellen Aufbau ist es möglich, verschiedene Fasermaterialien und Fasertypen, auch mit höherer Tex-Zahl (z. B. Heavy Tows), zu verarbeiten. Die Besonderheit ist die Erzielung einer robusten Einzelfaserimprägnierung in einem sehr weiten Viskositätsbereich. Somit lassen sich entgegen der gängigen Lösungen des Standes der Technik auch höherviskose Systeme verarbeiten.

Die Aufspreizung eines Faserbündels bei der Schmelzeimprägnierung ist bekannt. So wird in der EP 0 056 703 A1 ein Verfahren beschrieben, bei dem Verstärkungsfaser-Rovings durch eine Schmelze eines thermoplastischen Kunststoffs gezogen werden, in die mindestens eine beheizte Oberfläche zum Spreizen des Rovings in Form einer beheizten Spreizstange eintaucht. Praktisch sind aber immer mehrere Spreizvorrichtungen erforderlich. Die aufzubringenden Abzugskräfte steigen aber mit der Zahl der Spreizvorrichtungen, mit der Viskosität der Schmelze und mit der Abzugsgeschwindigkeit stark an. Da die daraus resultierenden hohen Abzugskräfte sowie die mechanische Reibung an den Stangen die Verstärkungsfaser schädigen und damit die Eigenschaften des Verbundwerkstoffs verschlechtern, ist das zur Verfügung stehende Arbeitsfenster sehr klein. Es kommt hinzu, dass die Imprägniergüte und damit auch die Qualität der Produkte mit steigender Viskosität der Schmelze und steigender Abzugsgeschwindigkeit abnehmen. Daher führt das Verfahren der EP 0 056 703 A1 nur bei Schmelzeviskositäten bis zu 30 Pas und bei niedrigen Abzugsgeschwindigkeiten (unter 0,3 m/min) zu guten Ergebnissen.

Die Imprägnierung von Verstärkungsfasern in einer Druckkammer bei 1 bis 800 bar wird in der EP 0 364 829 A2 beschrieben. Den Angaben in dieser Veröffentlichung zufolge benötigt man hierbei keine Aufspreizung des Faserbündels.

Eine geringe Matrixviskosität ermöglicht eine höhere Imprägnierwirkung. Je höher die Viskosität, umso schlechter die Imprägnierwirkung. Möglichkeiten, diesen Effekt zu mildern, resultieren in Lösungen mit sehr niedrigen Prozessgeschwindigkeiten zur Erhöhung der Verweilzeit, oder es werden sehr viele Umlenkpunkte verwendet, die eine hohe Faserschädigung verursachen und ebenfalls den Prozess verlangsamen. Diese Umlenkpunkte können durch die Werkzeuggeometrie geformt sein, wie beispielsweise in US 4 883 625 beschrieben, oder es sind Umlenkstangen eingebracht (z. B. JP 2007076224A). Um die resultierende Faserschädigung zu mindern, kann auch ein sehr genauer Matrixauftrag erfolgen, gefolgt von vielen anschließenden Umlenkpunkten mit sehr geringen Umlenkwinkeln (DE 41 12 129 A1; WO 2012/149129. Weitere Möglichkeiten sind ein einfacher Matrixauftrag und die anschließende Imprägnierung mittels Kalanderwalzen in beliebiger Anordnung (z. B. CN101474868A). Hier liegt die Restriktion bei thermisch empfindlichen bzw. thermooxidativ instabilen Massen sowie den resultierenden Bahngeschwindigkeiten. Andere technische Lösungen benötigen einen großen Matrixüberschuss in Imprägnierkammern oder Imprägnierbädern, was die Verweilzeit des verwendeten Polymers stark erhöht. Empfindliche Polymere können auch hier nicht verarbeitet werden.

Die japanische Patentanmeldung JP 2006289714A beschreibt ein Imprägnierverfahren, bei dem die Fasern für den Imprägniervorgang gespreizt werden. Der Schwerpunkt liegt hier auf einer vibrationsgestützten Imprägnierung. In einer Ausführung geschieht die Vorspreizung mittels vibrierender Umlenkrollen, die in einer schmelzegefüllten Kammer gelagert sind. Nachteilig sind die lange Verweilzeit der Schmelze sowie die Gefahr der Faserschädigung durch die Vibrationsbewegung. Letzteres sowie mehrere Umlenkpunkte verhindern hohe Prozessgeschwindigkeiten.

Die WO2014140025A1 beschreibt eine Vorrichtung zur Pultrusion von faserverstärkten thermoplastischen Halbzeugen, bei welcher die Faserbündel vor der Benetzung mit Matrixpolymer gespannt und aufgeweitet werden. Die Spannungserhöhung und Aufweitung geschieht durch mehrere Umlenker im Werkzeug. Unterteilt ist die Vorrichtung in zwei unterschiedlich temperierte Kammern, eine zur Vorimprägnierung, eine zur Formgebung. Bei der Herstellung feinerer Strukturen, beispielsweise dünner und hoch faserverstärkter Folien, führt diese Vorrichtung zu großen Problemen. Durch die vielen Umlenker im Werkzeug wird die Fadenspannung so hoch, dass die Fasern dazu neigen, zu reißen. Erhöht wird dieser Wiederstand durch die Zugabe von Matrixpolymer. Dementsprechend kann diese Technologie auch nur im Bereich Halbzeuge mit höheren Wandstärken und einem begrenzten Faservolumenanteil eingesetzt werden.

Die WO2012149129A1 beschreibt einen Imprägnierprozess zur kontinuierlichen Imprägnierung von Rovings. Das Imprägnierprinzip besteht aus einem gleichmäßigen Filmauftrag und dem langsamen Einmassieren der Schmelze in die vorgespreizten Rovings. Um die Imprägnierung zu gewährleisten, wird das Faser-Schmelzegemisch über sehr viele kleine Profile in Wellenform oder ähnlicher Ausprägung gezogen. Der kurzzeitige Kontakt bei geringen Umlenkwinkeln ermöglicht ein vorsichtiges Eindringen der Schmelze in die Fasern sowie eine homogene Verteilung. Der große Nachteil dieser Imprägniertechnik ist die teilweise sehr hohe Verweilzeit der Schmelze in der Imprägnierkammer. Nach kurzer Zeit setzten sich die geometriebedingt vorhandenen Hohlräume zu und thermisch sensible Massen degradieren oder bauen auf. Weiterhin wird die Imprägnierwirkung durch beheizte und rotierende Walzen erzielt, die in der Imprägnierkammer angebracht sind und mit einer gezielten Geschwindigkeit eingestellt werden können. Somit können die breitgelegten Fasern in diesem Bereich mit einer gezielten Faserspannung versehen werden. Das hintere Walzenpaar sorgt zudem für eine zusätzliche Imprägnierung unter Druck durch den eingestellten Walzenspalt. Da diese Walzenpaare im Imprägnierwerkzeug platziert sind und dauerhaft mit flüssiger Schmelze umgeben sind, sammeln sich auch hier schnell Verunreinigungen in Form von Filamentresten und Polymer, welches degradiert. Thermisch sensible Massen können auf diese Weise nur schwer kontinuierlich gefahren werden.

Demgegenüber besteht die Aufgabe der vorliegenden Erfindung darin, die oben genannten Probleme zu lösen und insbesondere ein Verfahren zur Verfügung zu stellen, bei dem auf einfache Weise ein hoher Imprägnierungsgrad bei geringer Verweilzeit der Schmelze erzielt werden sollte, wobei Faserschädigung vermieden und trotzdem eine hohe Abzugsgeschwindigkeit erzielt werden kann. Die für das Verfahren verwendete Vorrichtung sollte keine Totzonen enthalten und selbstreinigend sein, um geringere Verweilzeiten des Polymers zu erlauben. Das Verfahren sollte insbesondere auch bei einer hohen Bandbreite an Fasertypen sowie auch bei höheren Matrixviskositäten zu einer sehr guten Imprägnierqualität führen. Mit sehr guter Imprägnierqualität ist gemeint, dass sehr fein verteilte Einzelfilamentfasern vorliegen, die im Idealfall jede einzeln vollständig mit Matrix umschlossen sind und dass so gut wie keine nicht imprägnierte Filamentbündel oder Filamentnester vorhanden sind. Weiterhin sind auch so gut wie keine Lufteinschlüsse im Produkt vorhanden. Die Imprägnierqualität wird standardmäßig mittels Schliffbildaufnahmen oder REM-Aufnahmen beurteilt.

Diese Aufgabe wird durch ein Verfahren zur Herstellung eines Verbundwerkstoffs gelöst, das eine spezielle Kombination von Benetzungstechnik und weiterer Imprägnierung verwirklicht. Das Verfahren enthält folgende Schritte:
a) Eine Faserlage wird über eine Spreizvorrichtung eingezogen und dabei mindestens um den Faktor 1,2, vorzugsweise um den Faktor 1,4 und besonders bevorzugt um den Faktor 1,6 stärker aufgespreizt als es der Breite des Endprodukts entspricht, wobei die Faserlage so weit aufgespreizt wird, dass ihre mittlere Dicke dem 1- bis 50-fachen Filamentdurchmesser entspricht;
b) im gespreizten Zustand wird eine Schmelze mittels mindestens einer Auftragsdüse aufgetragen;
c) durch eine Querschnittsverjüngung führt das Werkzeug die benetzte Faserlage mindestens auf den Querschnitt, mit dem das Produkt die Abzugsdüse verlässt;
d) anschließend lenkt ein Radius die benetzten Fasern um einen Winkel von 5 bis 60°, vorzugsweise von 8 bis 50°, besonders bevorzugt von 12 bis 40° und insbesondere bevorzugt von 15 bis 35° um;
e) eine Beruhigungszone vergleichmäßigt die Faserverteilung auf eine einheitliche Höhe;
f) durch eine Abzugsdüse am Werkzeugende erfolgt die erste Formgebung.

Das Produkt kann anschließend kalandriert und abgekühlt werden.

Bei diesem Verfahren wird die Faserlage durch einen Transportkanal gezogen, der sich vom Einzug bis zur Abzugsdüse erstreckt.
Eine bevorzugte Ausführungsform ist dadurch gekennzeichnet, dass im Schritt c) die Breite der benetzten Faserlage auf einen Querschnitt zurückgeführt wird, der kleiner ist als der Querschnitt, mit dem das Produkt die Abzugsdüse verlässt, und zusätzlich entweder vor oder nach dem Schritt d) die Breite der benetzten Faserlage auf den Querschnitt geführt wird, mit dem das Produkt die Abzugsdüse verlässt. Im Allgemeinen wird im Schritt c) die Breite der benetzten Faserlage auf einen Querschnitt zurückgeführt, der 99 bis 10 % des Querschnitts beträgt, mit dem das Produkt die Abzugsdüse verlässt. Besonders bevorzugt sind es 98 bis 16 %, insbesondere bevorzugt 96 bis 24 % und ganz besonders bevorzugt 96 bis 24 %. Hierbei sind insbesondere folgende Varianten möglich:
1. Im Schritt c) wird die Breite der benetzten Faserlage auf einen Querschnitt zurückgeführt, der kleiner ist als der Querschnitt, mit dem das Produkt die Abzugsdüse verlässt, und direkt anschließend wird die Breite der benetzten Faserlage auf den Querschnitt geführt, mit dem das Produkt die Abzugsdüse verlässt. Anschließend folgen nacheinander die Schritte d), e) und f).
2. Im Schritt c) wird die Breite der benetzten Faserlage auf einen Querschnitt zurückgeführt, der kleiner ist als der Querschnitt, mit dem das Produkt die Abzugsdüse verlässt. Direkt anschließend erfolgt der Schritt d). Danach wird die Breite der benetzten Faserlage auf den Querschnitt geführt, mit dem das Produkt die Abzugsdüse verlässt. Anschließend folgen die Schritte e) und f).
3. Im Schritt c) wird die Breite der benetzten Faserlage auf einen Querschnitt zurückgeführt, der kleiner ist als der Querschnitt, mit dem das Produkt die Abzugsdüse verlässt. Direkt anschließend folgen die Schritte d) und e). Danach wird die Breite der benetzten Faserlage auf den Querschnitt geführt, mit dem das Produkt die Abzugsdüse verlässt, worauf der Schritt f) folgt.

Unter "Faserlage" ist ein Bündel aus einer größeren Zahl von Einzelfilamenten zu verstehen. Üblicherweise sind es mehrere tausend Einzelfilamente. Die Faserlage kann aus einem Roving oder auch aus einer Mehrzahl an Rovings bestehen; vorzugsweise besteht sie aus einem bis maximal 1000 Rovings und besonders bevorzugt aus einem bis maximal 800 Rovings. Diese Rovings werden beim erfindungsgemäßen Verfahren einzeln von Spulen abgewickelt oder abgezogen und vor der Spreizvorrichtung oder am Beginn der Spreizvorrichtung so zusammengeführt, dass sie eine einzige Faserlage ergeben. Unter "Roving" versteht man hierbei generell ein Bündel von Einzelfilamenten; dieses Bündel kann aus einem einzelnen Fasertyp oder auch aus verschiedenen Fasertypen bestehen. Grundsätzlich sind alle Fasern von ausreichender Länge geeignet; es können anorganische Fasern, Polymerfasern sowie Naturfasern eingesetzt werden. Beispiele geeigneter Fasern sind Metallfasern, Glasfasern (z. B. aus E-Glas, A-Glas, C-Glas, D-Glas, AR-Glas, R-Glas, S1-Glas, S2-Glas usw.), Carbonfasern, metallisierte Carbonfasern, Borfasern, keramische Fasern (z. B. aus Al₂O₃ oder SiO₂), Basaltfasern, Siliciumcarbidfasern, Aramidfasern, Polyamidfasern, Polyethylenfasern, Polyesterfasern (z. B. aus Polybutylenterephthalat), Fasern aus flüssigkristallinem Polyester, Polyacrylnitrilfasern sowie Fasern aus Polyimid, Polyetherimid, Polyphenylensulfid, Polyetherketon, Polyetheretherketon, ferner Cellulosefasern, die mittels des Viskoseverfahrens ersponnen wurden und üblicherweise als Viskosefasern bezeichnet werden, Hanffasern, Flachsfasern, Jutefasern und dergleichen. Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden.

Die Aufspreizung im Verfahrensschritt a) ist abhängig von der Geometrie des Endprodukts. Wenn das Endprodukt ein Tape ist, wird die Faserlage um einen vergleichsweise hohen Faktor aufgespreizt. Wenn das Endprodukt dagegen relativ dick ist, beispielsweise einen rechteckigen oder quadratischen Querschnitt hat, kann die Faserlage bezogen auf die Breite des Endprodukts um einen vergleichsweise niedrigen Faktor aufgespreizt werden, so dass keine sinnvolle allgemeingültige Obergrenze angegeben werden kann. Je nach Geometrie des Endprodukts kann eine Aufspreizung vorzugsweise maximal um den Faktor 30, besonders bevorzugt maximal um den Faktor 20, insbesondere bevorzugt maximal um den Faktor 14 und ganz besonders bevorzugt maximal um den Faktor 8 erfolgen, jeweils bezogen auf die Breite des Endprodukts.

Hierbei wird die Faserlage so weit aufgespreizt, dass ihre mittlere Dicke dem 1- bis 50-fachen Filamentdurchmesser, bevorzugt dem 1- bis 40-fachen Filamentdurchmesser, besonders bevorzugt dem 1,5- bis 35-fachen Filamentdurchmesser und ganz besonders bevorzugt dem 1,8-bis 30-fachen Filamentdurchmesser entspricht. Die Mittelung erfolgt hierbei über die Breite der Faserlage hinweg. Bei Fasern mit nicht kreisförmigem Querschnitt wird als Filamentdurchmesser die kürzeste Querschnittsachse gewählt. Hinsichtlich des Faserquerschnitts kann den Angaben des Faserherstellers gefolgt werden. Bei Mischung verschiedener Fasern wird als Filamentdurchmesser das arithmetische Mittel bezogen auf die Zahl der Einzelfilamente gewählt. Wenn Herstellerangaben nicht verfügbar sind oder bei Fasern gleicher Art mit unterschiedlicher Geometrie, etwa Naturfasern, wird der mittlere Filamentdurchmesser durch eine rasterelektronenmikroskopische Aufnahme (REM-Aufnahme), Ausmessen und Berechnen des arithmetischen Mittels bezogen auf die Zahl der Einzelfilamente bestimmt.

Die Matrix des Verbundwerkstoffs kann eine thermoplastische Formmasse, ein Duroplast, ein Thermoplast-Duroplast-Hybridsystem, ein thermoplastisches Elastomer oder ein vernetztes Elastomer sein. Thermoplastische Formmassen bestehen aus einem Thermoplasten als Hauptbestandteil oder alleinigem Bestandteil. Weitere Bestandteile können beispielsweise Stabilisatoren, Verarbeitungshilfsmittel, Pigmente, Flammschutzmittel, andere Thermoplaste als Blendkomponenten, Schlagzähmodifier oder dergleichen sein. Geeignete Thermoplaste sind beispielsweise Polyolefine (wie Polyethylen oder Polypropylen), Polyester (wie Polyethylenterephthalat, Polybutylenterephthalat, Polyarylate oder flüssigkristalline Polyester), Polycarbonat, Polyestercarbonat, Polyamide (wie PA46, PA6, PA66, PA610, PA612, PA1010, PA11, PA12, teilaromatische Polyamide (PPA) oder transparente Polyamide (beispielsweise auf Basis von linearen oder verzweigten aliphatischen, cycloaliphatischen oder aromatischen Dicarbonsäuren und Diaminen), Polyarylenetherketonen (wie Polyetheretherketon, Polyetherketon oder Polyetheretherketonketon), Polyphenylensulfid, Polyetherimid, Polymethylmethacrylat, Polystyrol, Styrol-Acrylnitril-Copolymere (SAN), Styrol-Acrylnitril-Butadien-Copolymere (ABS), Polyacetal, Polyurethan, Polyimid, Polysulfon, Polyethersulfon, Polyphenylenoxid oder Fluorpolymere (wie PVDF oder ETFE).

Geeignete Duroplaste sind beispielsweise ungesättigte Polyesterharze, Epoxidharze, Aminoplaste, Phenoplaste, vernetzte Polyacrylate, Polyurethane, Melaminharze, Vinylesterharze oder Bismaleinimidharze. Die im Verfahrensschritt b) aufgetragene Schmelze ist in diesem Fall ein harz-Härter-Gemisch oder eine sonstige geeignete Vorstufe, etwa ein Präpolymer.

Geeignete thermoplastische Elastomere sind beispielsweise TPE-O (thermoplastische Elastomere auf Olefinbasis, etwa PP/EPDM), TPE-V (vernetzte thermoplastische Elastomere auf Olefinbasis, insbesondere PP/vernetztes EPDM), TPE-U (thermoplastische Elastomere auf Polyurethanbasis), TPE-E (thermoplastische Polyesterelastomere), TPE-S (Styrolblockcopolymere, etwa SBS, SEBS, SEPS, SEEPS oder MBS) sowie TPE-A (Polyamidelastomere).

Geeignete vernetzte Elastomere werden aus einem Kautschukcompound erhalten, das dem Stand der Technik entsprechend ein Vulkanisationsmittel sowie gegebenenfalls Vulkanisationshilfsmittel, Füllstoffe, Öle sowie weitere übliche Zusätze enthält. Beispiele derartiger Elastomere sind EPDM, Styrol/Butadien-Kautschuk, Butylkautschuk, Silikonkautschuk, Epoxidkautschuk, Chloroprenkautschuk, Acrylkautschuk und dergleichen.

Die Querschnittsverjüngung im Verfahrensschritt c) führt dazu, dass die Aufspreizung der benetzten Faserlage reduziert wird; das heißt, dass deren Breite in Richtung der Breite der Abzugsdüse geführt wird. In einer Ausführungsform wird die Breite der benetzten Faserlage auf die Breite der Abzugsdüse geführt. In einer weiteren, bevorzugten Ausführungsform wird die Breite der benetzten Faserlage auf eine Breite geführt, die kleiner ist als die Breite der Abzugsdüse. In diesem Fall wird auf dem Weg zur Abzugsdüse die Breite der benetzten Faserlage durch erneute Aufspreizung wieder erhöht. Die Querschnittsverjüngung im Verfahrensschritt c) wird vorzugsweise so durchgeführt, dass bei allen hier betrachteten Ausführungsformen die Breite der benetzten Faserlage mindestens um den Faktor 1,2 und besonders bevorzugt mindestens um den Faktor 1,4 reduziert wird.

Im anschließenden Verfahrensschritt d) beträgt der Radius der Umlenkung vorzugsweise 2 bis 90 mm, besonders bevorzugt 3 bis 60 mm, insbesondere bevorzugt 4 bis 40 mm und ganz bevorzugt 4 bis 30 mm. Variationen der Geometrie sind möglich; beispielsweise kann an der Umlenkstelle der Radius mit einer kurzen Erhebung kombiniert werden, etwa um die Faserschlichte aufzubrechen. Vorzugsweise liegt eine einzige Umlenkstelle vor, so dass eine einmalige Richtungsänderung erfolgt. Auf diese Weise wird vermieden, dass die Faserspannung unnötig hoch ist, was Faserbruch effizient zurückdrängt.

Die Abzugsdüse enthält in der Regel keine integrierte Abzugseinrichtung. Der Strang wird üblicherweise vielmehr durch einen direkt nach der Düse angebrachten Abzug oder durch Kalanderwalzen gezogen. Ein derartiger Abzug, beispielsweise in Form von Rollen oder Walzen, sowie Kalander sind Stand der Technik.

In der Figur 1 ist das Anlagenkonzept schematisch dargestellt.

Die Figur 2 zeigt die Querschnittsverjüngung, durch die die benetzte Faserlage auf den späteren Produktquerschnitt geführt wird.

Die Figur 3 zeigt eine Ausführungsform der Anlage.

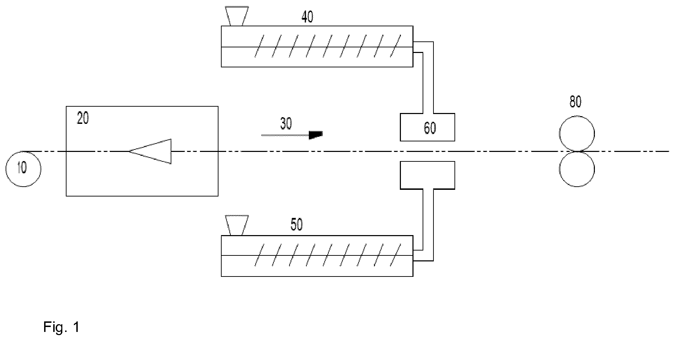

Wie in der **Figur 1** dargestellt, wird die Faserlage z. B. in Form eines Rovings von einer Spule **10** abgewickelt. Hierbei können mehrere Spulen **10** verwendet werden. Die Faserlage wird auf einer Spreizvorrichtung **20** aufgespreizt und dann in das Werkzeug eingezogen. Hierbei können übliche Spreizvorrichtungen verwendet werden. Die Bewegungsrichtung des Rovings ist in der Figur 1 mit **30** gekennzeichnet. Die Faserlage kann hierbei optional vorgeheizt werden, beispielsweise mittels IR-Strahlung oder durch Umluft. Durch zwei Auftragsdüsen **60** wird die Faserlage dann von oben und von unten mit Schmelze beaufschlagt. Alternativ hierzu kann der Schmelzeauftrag auch nur von oben oder nur von unten erfolgen. Die Schmelze und der erforderliche Auftragsdruck wird durch die Extruder **40** und **50** zur Verfügung gestellt (alternativ hierzu können auch Schmelzepumpen verwendet werden, die einer Plastifiziereinheit nachgeschaltet sind). Die nachfolgende Querschnittsverjüngung, der Umlenkradius, die Beruhigungszone und die Abzugsdüse sind in der Figur 1 nicht dargestellt. Das abgezogene Profil kann zur endgültigen Formgebung noch mittels eines Kalanders **80** kalandriert werden. Der erhaltene Strang wird dann entweder abgekühlt und gewickelt oder auf Länge geschnitten; alternativ hierzu kann er sofort weiterverarbeitet werden, z. B. durch Wickeln um einen Kern und anschließendes Abkühlen (im Fall einer thermoplastischen Matrix) oder anschließendes Aushärten (im Fall einer duroplastischen Matrix).

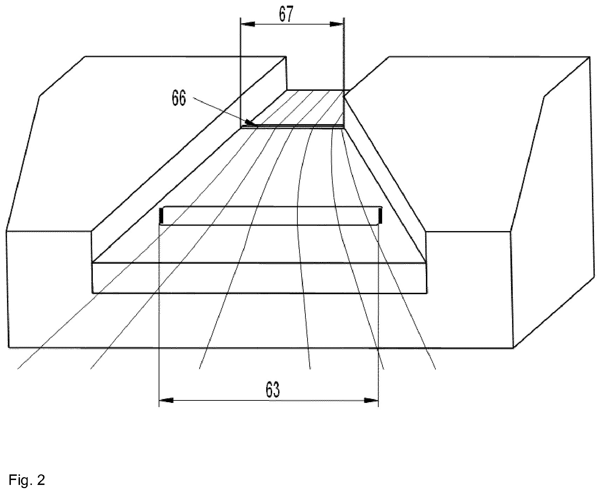

Die **Figur 2** zeigt, wie die gespreizte Faserlage in die Querschnittsverjüngung eingezogen wird. Über eine Auftragsdüse **63** wird die Schmelze aufgetragen. In einer alternativen Ausführungsform kann die Auftragsdüse **63** auch, statt wie in der Figur 2 dargestellt am Beginn der Querschnittsverjüngung, an einer Stelle vor der Querschnittsverjüngung positioniert sein, so dass die erste Phase der Benetzung bereits im voll aufgespreizten Zustand erfolgt. Am Ende der Querschnittsverjüngung befindet sich eine Umlenkung **66**; an dieser Stelle ist der Querschnitt der Faserlage auf die Breite **67** reduziert.

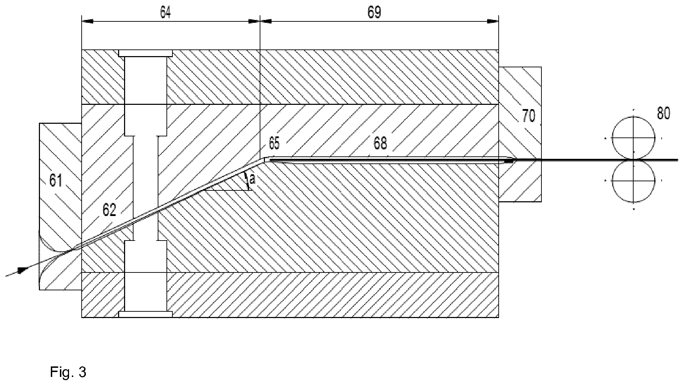

In der **Figur 3** wird die Vorrichtung von der Seite betrachtet. Die aufgespreizte Faserlage wird über den Einzug **61** in das Werkzeug eingeführt. In der Einlauf- und Benetzungszone **62** wird die Schmelze aufgegeben. Die Länge der Einlauf- und Benetzungszone ist mit **64** dargestellt. Der Matrixauftrag erfolgt im gespreizten Zustand mittels Auftragsdüsen; durch die anschließende Querschnittsverjüngung kann die Matrix wegen der Relativbewegungen der Faserverschiebung in die Zwischenfaserschichten eindringen. Am Ende der Querschnittsverjüngung wird die benetzte Faserlage an der Umlenkung **65** um den Winkel α abgelenkt. Der Radius ist hier nicht dargestellt.

Diese Umlenkung führt zu weiteren relativen Faserbewegungen sowie zu einem lokalen Druckgefälle von der Umlenkstelle in die Restkavität, was eine weitere Matrixdurchdringung ermöglicht. Durch die Anordnung der Umlenkung nach vollendeter Querschnittsverjüngung wird eine besonders gute Imprägnierqualität erzielt, verglichen mit Ausführungen im Stand der Technik, bei denen eine Umlenkung während der Querschnittsverjüngung vorgenommen wird.

Die nachfolgende Beruhigungszone **68** mit der Länge **69** vergleichmäßigt die Faserverteilung auf eine einheitliche Höhe. Unterstützt wird dieser Vorgang sowie die weitere Imprägnierung dadurch, dass dieser Kammerbereich durch Schmelze gefüllt sein kann. Am Werkzeugende ist die Düse **70** angebracht, die die erste Formgebung des späteren Produkts übernimmt. Der Druck steigt hierbei in der Regel auf dem Weg von der Auftragszone bis zur Düse an; der genaue Druckverlauf ist materialabhängig. Die endgültige Formgebung wird hier durch den Kalander **80** unternommen.

Beim erfindungsgemäßen Verfahren wird eine Schmelze aufgetragen, die vorzugsweise eine Viskosität von 10 mPas bis 400 Pas und besonders bevorzugt bis 300 Pas besitzt. Bei Präpolymeren bzw. Harz-Härter-Systemen, die nach Härtung Duroplaste oder Thermoplast-Duroplast-Hybridsystemen ergeben, liegt die Viskosität dabei im unteren Bereich bis hinab zu 10 mPas oder noch tiefer. Bei einer Schmelze aus einer thermoplastischen Formmasse, einem thermoplastischen Elastomer oder einem Elastomercompound beträgt die Viskosität in der Regel mindestens 1 Pas. Unter Viskosität wird erfindungsgemäß die Ruhe-Scherviskosität bei der verfahrensgemäßen Temperatur verstanden, gemessen in einem mechanischen Spektrometer nach ASTM D4400.

Beim Auftragen der Schmelze wird in der Regel ohne Schmelzeüberschuss, insbesondere bei höherviskosen Schmelzen, oder mit nur geringem Schmelzeüberschuss gearbeitet. Beim Arbeiten mit Schmelzeüberschuss muss Vorsorge getroffen werden, dass die überschüssige Schmelze durch eine dafür vorgesehene Öffnung abfließen kann. Das Verhältnis von Fasern zu Schmelze wird so eingestellt, dass der Volumenanteil der Fasern im Fertigteil etwa 10 bis 85 %, bevorzugt 15 bis 80 % und besonders bevorzugt 20 bis 75 % beträgt.

Wenn die Matrix des erhaltenen Verbundwerkstoffs ein Duromer ist, findet die Aushärtereaktion üblicherweise vornehmlich in der Beruhigungszone statt. Der abgezogene Strang ist dann bereits im Wesentlichen ausgehärtet.

Die Länge der Beruhigungszone ist abhängig beispielweise von der Schmelzeviskosität, der vorgesehenen Abzugsgeschwindigkeit und der Anlagengröße. Beispielsweise werden bei einer Laboranlage, auf der ein Tape von 40 mm Breite aus E- oder S-Glas und PA12 hergestellt wird, sehr gute Ergebnisse bei einer Länge von 100 mm erhalten. Dies ist aber nur ein ungefährer Anhaltspunkt. Die Beruhigungszone kann auch kürzer oder auch deutlich länger werden.

Die Abzugsgeschwindigkeit ist nach Bedarf einstellbar. Sie liegt vorzugsweise bei 0,1 bis 30 m/min und besonders bevorzugt bei 0,5 bis 25 m/min.

Beim erfindungsgemäßen Verfahren kann der erhaltene Strang jede gewünschte Geometrie besitzen. Er kann beispielsweise eine Folie, ein Tape, eine Platte, ein Rundprofil, ein Rechteckprofil oder ein komplexes Profil sein. Vorzugsweise ist er ein Tape oder eine Platte; dies gilt insbesondere für das Verfahren, bei dem im Schritt c) die Breite der benetzten Faserlage auf einen Querschnitt zurückgeführt wird, der kleiner ist als der Querschnitt, mit dem das Produkt die Abzugsdüse verlässt, und zusätzlich nach dem Schritt d) die Breite der benetzten Faserlage auf den Querschnitt geführt wird, mit dem das Produkt die Abzugsdüse verlässt.

In einer Variante des erfindungsgemäßen Verfahrens gemäß Anspruch 1 oder Anspruch 2 wird der erhaltene Strang, der eine thermoplastische Matrix enthält, zu langfaserverstärktem Stäbchengranulat mit einer Länge von 4 bis 60 mm, vorzugsweise 5 bis 50 mm, besonders bevorzugt 6 bis 40 mm, insbesondere bevorzugt 5 bis 30 mm und ganz besonders bevorzugt 6 bis 25 mm geschnitten. Aus diesem Granulat können dann Formteile mittels Spritzgießen, Extrusion, Pressen oder anderer gebräuchlicher Formgebungsverfahren hergestellt werden, wobei besonders gute Eigenschaften des Formteils mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass bevorzugt Schnecken mit großem Durchmesser und tiefem Kompressionsverhältnis sowie großzügig dimensionierte Düsen- und Angusskanäle zum Einsatz kommen. Ergänzend sollte dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden Formteile erhalten, die im Mittel eine höhere Faserlänge aufweisen als vergleichbare Formteile hergestellt aus kurzfaserverstärkten Formmassen. Hierdurch wird eine deutliche Verbesserung der Eigenschaften, insbesondere beim Zug-E-Modul, der Reißfestigkeit und der Kerbschlagzähigkeit erreicht.

Gegenstand der Erfindung ist auch eine Vorrichtung zur Herstellung eines Faserverbundwerkstoffs, die folgende Elemente enthält:
a) Eine Spreizvorrichtung, über die eine Faserlage eingezogen und gleichzeitig mindestens um den Faktor 1,2, vorzugsweise mindestens um den Faktor 1,4 und besonders bevorzugt mindestens um den Faktor 1,6 stärker aufgespreizt werden kann als es der Breite des Endprodukts entspricht,
b) in Transportrichtung folgend eine oder mehrere Auftragsdüsen, mit denen Schmelze auf die gespreizte Faserlage aufgetragen werden kann,
c) eine anschließende Querschnittsverjüngung des Transportkanals, mit der die benetzte Faserlage mindestens auf den Querschnitt der Abzugsdüse geführt werden kann,
d) eine anschließende Umlenkstelle mit einer Umlenkung um 5 bis 60°, vorzugsweise von 8 bis 50°, besonders bevorzugt von 12 bis 40° und insbesondere bevorzugt von 15 bis 35°;
e) eine Beruhigungszone und
f) eine Abzugsdüse.

Details zu dieser Vorrichtung ergeben sich aus der obigen Verfahrensbeschreibung, da die Vorrichtung zur Durchführung des erfindungsgemäßen Verfahrens dient.

Wie die Figur 2 zeigt, ist die Vorrichtung vorzugsweise so aufgebaut, dass sie eine Einlaufschräge besitzt, die durch die Umlenkung an der Umlenkstelle des Elements d) bedingt ist; der Winkel der Einlaufschräge entspricht hierbei dem Winkel der Umlenkung im Element d). Andernfalls müsste die Abzugsdüse schräg angeordnet sein, was sich anlagentechnisch weniger leicht realisieren lässt.

In einer bevorzugten Ausführungsform ist die Querschnittsverjüngung des Elements c) so ausgeführt, dass die Breite der benetzten Faserlage auf einen Querschnitt zurückgeführt werden kann, der kleiner ist als der Querschnitt der Abzugsdüse, und zusätzlich entweder vor oder nach der Umlenkstelle gemäß Element d) die Breite der benetzten Faserlage auf den Querschnitt der Abzugsdüse geführt werden kann.

In der beschriebenen Form enthält die Vorrichtung eine Kammer, in der eine Faserlage benetzt und der Querschnitt verjüngt wird. Insbesondere im Produktionsmaßstab ist es jedoch vorteilhaft, wenn die Vorrichtung mehrere Kammern enthält und die Teilstränge an der Umlenkstelle oder nach der Umlenkstelle zusammengelegt werden. So sind folgende Ausführungsformen der Vorrichtung und des Verfahrens bevorzugt:
- Zwei, drei oder mehr Kammern liegen übereinander; in jeder Kammer wird ein Teilstrang mit Schmelze benetzt und der Querschnitt des Transportkanals verjüngt. Die Teilstränge werden dann an der Umlenkstelle oder nach der Umlenkstelle übereinander zusammengelegt. Wenn die einzelnen Teilstränge unterschiedliche Fasern enthalten, ist hierbei ein gezielter Lagenaufbau bei der Herstellung komplexer Profile möglich.
- Zwei, drei oder mehr Kammern liegen übereinander; in jeder Kammer wird ein Teilstrang mit Schmelze benetzt und der Querschnitt des Transportkanals verjüngt. Die Teilstränge werden dann an der Umlenkstelle oder nach der Umlenkstelle nebeneinander zusammengelegt.
- Zwei, drei oder mehr Kammern liegen nebeneinander; in jeder Kammer wird ein Teilstrang mit Schmelze benetzt und der Querschnitt des Transportkanals verjüngt. Die Teilstränge werden dann an der Umlenkstelle oder nach der Umlenkstelle übereinander zusammengelegt.
- Zwei, drei oder mehr Kammern liegen nebeneinander; in jeder Kammer wird ein Teilstrang mit Schmelze benetzt und der Querschnitt des Transportkanals verjüngt. Die Teilstränge werden dann an der Umlenkstelle oder nach der Umlenkstelle nebeneinander zusammengelegt.

Der deutliche Unterschied zu bisherigen Lösungen ist erfindungsgemäß die gezielte Benetzung im stark aufgespreizten Zustand und die anschließende Imprägnierung der Einzelfasern durch Relativbewegungen in Längs- und Querrichtung, die durch die Querschnittsverjüngung, die anschließende Umlenkung sowie gegebenenfalls eine anschließende erneute Querschnittsaufweitung zustande kommen. Damit wird eine sehr gute Imprägnierqualität über einen sehr weiten Viskositätsbereich hinweg erzielt, auch bei hoher Abzugsgeschwindigkeit.

### Bezugszeichenliste

- 10: Spule
- 20: Spreizvorrichtung
- 30: Bewegungsvorrichtung der Faserlage
- 40: Extruder
- 50: Extruder
- 60: Auftragsdüse
- 61: Einzug
- 62: Einlauf- und Benetzungszone
- 63: Auftragsdüse
- 64: Länge der Einlauf- und Benetzungszone
- 65: Umlenkung
- 66: Umlenkung
- 67: Querschnittsbreite nach der Umlenkung
- 68: Beruhigungszone
- 69: Länge der Beruhigungszone
- 70: Düse
- 80: Kalander

## Patentansprüche

1. Verfahren zur Herstellung eines Faserverbundwerkstoffs, das folgende Schritte enthält:
a) Eine Faserlage wird über eine Spreizvorrichtung (20) eingezogen und dabei mindestens um den Faktor 1,2 stärker aufgespreizt als es der Breite des Endprodukts entspricht, wobei die Faserlage so weit aufgespreizt wird, dass ihre mittlere Dicke dem 1- bis 50-fachen Filamentdurchmesser entspricht.
b) im gespreizten Zustand wird eine Schmelze mittels mindestens einer Auftragsdüse (60) aufgetragen;
c) durch eine Querschnittsverjüngung führt das Werkzeug die Breite der benetzten Faserlage mindestens auf den Querschnitt, mit dem das Produkt die Abzugsdüse verlässt;
d) anschließend lenkt ein Radius die benetzten Fasern um einen Winkel von 5 bis 60° um;
e) eine Beruhigungszone (68)
vergleichmäßigt die Faserverteilung auf eine einheitliche Höhe;
f) durch eine Abzugsdüse (70) am Werkzeugende erfolgt die erste Formgebung.

2. Verfahren gemäß Anspruch 1, **dadurch gekennzeichnet, dass** im Schritt c) die Breite der benetzten Faserlage auf einen Querschnitt zurückgeführt wird, der kleiner ist als der Querschnitt, mit dem das Produkt die Abzugsdüse verlässt, und zusätzlich entweder vor oder nach dem Schritt d) die Breite der benetzten Faserlage auf den Querschnitt geführt wird, mit dem das Produkt die Abzugsdüse verlässt.

3. Verfahren gemäß einem der vorhergehenden Ansprüche, **dadurch gekennzeichnet, dass** die Matrix des Verbundwerkstoffs eine thermoplastische Formmasse, ein Duroplast, ein Thermoplast-Duroplast-Hybridsystem, ein thermoplastisches Elastomer oder ein vernetztes Elastomer ist.

4. Verfahren gemäß einem der vorhergehenden Ansprüche, **dadurch gekennzeichnet, dass** im Schritt d) der Radius der Umlenkung 2 bis 90 mm beträgt.

5. Verfahren gemäß einem der vorhergehenden Ansprüche, **dadurch gekennzeichnet, dass** im Schritt d) eine einzige Umlenkung vorliegt..

6. Verfahren gemäß einem der vorhergehenden Ansprüche, **dadurch gekennzeichnet, dass** der erhaltene Strang nach Verlassen der Abzugsdüse kalandriert wird.

7. Verfahren gemäß einem der vorhergehenden Ansprüche, **dadurch gekennzeichnet, dass** der erhaltene Strang zu langfaserverstärktem Stäbchengranulat mit einer Länge von 4 bis 60 mm geschnitten wird.

8. Verfahren gemäß einem der Ansprüche 1 bis 7, **dadurch gekennzeichnet, dass** der erhaltene Strang eine Folie, ein Tape, eine Platte, ein Rundprofil, ein Rechteckprofil oder ein komplexes Profil ist.

9. Vorrichtung zur Herstellung eines Faserverbundwerkstoffs, die folgende Elemente enthält:
a) Eine Spreizvorrichtung, über die eine Faserlage in eine Kammer eingezogen und gleichzeitig mindestens um den Faktor 1,2 stärker aufgespreizt werden kann als es der Breite des Endprodukts entspricht;
b) in Transportrichtung folgend eine oder mehrere Auftragsdüsen, mit denen Schmelze auf die gespreizte Faserlage aufgetragen werden kann;
c) eine anschließende Querschnittsverjüngung des Transportkanals, mit der die benetzte Faserlage mindestens auf den Querschnitt der Abzugsdüse geführt werden kann,
d) eine anschließende Umlenkstelle mit einer Umlenkung um 5 bis 60°;
e) eine Beruhigungszone und
f) eine Abzugsdüse.

10. Vorrichtung gemäß Anspruch 9, **dadurch gekennzeichnet, dass** mit der Spreizvorrichtung die Faserlage so weit aufgespreizt werden kann, dass ihre mittlere Dicke dem 1- bis 50-fachen Filamentdurchmesser entspricht.

11. Vorrichtung gemäß einem der Ansprüche 9 und 10, **dadurch gekennzeichnet, dass** im Element c) die Breite der benetzten Faserlage auf einen Querschnitt zurückgeführt werden kann, der kleiner ist als der Querschnitt der Abzugsdüse, und zusätzlich entweder vor oder nach der Umlenkstelle gemäß Element d) die Breite der benetzten Faserlage auf den Querschnitt der Abzugsdüse geführt werden kann.

12. Vorrichtung gemäß einem der Ansprüche 9 bis 11, **dadurch gekennzeichnet, dass** bei der Umlenkstelle der Radius der Umlenkung 2 bis 90 mm beträgt.

13. Vorrichtung gemäß einem der Ansprüche 9 bis 12, **dadurch gekennzeichnet, dass** im Element d) eine einzige Umlenkstelle vorliegt.

14. Vorrichtung gemäß einem der Ansprüche 9 bis 13, **dadurch gekennzeichnet, dass** sie mehrere Kammern enthält, wobei die Teilstränge an der Umlenkstelle oder nach der Umlenkstelle zusammengelegt werden können.

## Claims

1. Process for the production of a fibre-composite material, comprising the following steps:
a) a fibre layer is introduced by way of a spreader device (20) and thus spread to a width greater than that of the final product, at least by a factor of 1.2, where the extent of spreading of the fibre layer is such that its average thickness corresponds to 1 to 50 times the filament diameter;
b) a melt is applied by means of at least one applicator nozzle (60) to the spread material;
c) by virtue of cross-section-narrowing, the mould brings the width of the wetted fibre layer at least to the cross section with which the product leaves the take-off die;
d) a radius then deflects the wetted fibres by an angle of 5 to 60°;
e) a relaxation zone (68) renders the fibre distribution more uniform to give a uniform height;
f) the first shaping is achieved by a take-off die (70) at the end of the mould.

2. Process according to Claim 1, **characterized in that** in the step c) the width of the wetted fibre layer is reduced to a cross section that is smaller than the cross section with which the product leaves the take-off die, and additionally either prior to or after the step d) the width of the wetted fibre layer is brought to the cross section with which the product leaves the take-off die.

3. Process according to any of the preceding claims, **characterized in that** the matrix of the composite material is a thermoplastic moulding composition, a thermoset, a thermoplastic-thermoset hybrid system, a thermoplastic elastomer or a crosslinked elastomer.

4. Process according to any of the preceding claims, **characterized in that** in the step d) the deflection radius is 2 to 90 mm.

5. Process according to any of the preceding claims, **characterized in that** the step d) comprises a single deflection.

6. Process according to any of the preceding claims, **characterized in that** the strand obtained is calendered after leaving the take-off die.

7. Process according to any of the preceding claims, **characterized in that** the strand obtained is cut to give elongate long-fibre-reinforced pellets of length 4 to 60 mm.

8. Process according to any of Claims 1 to 7, **characterized in that** the strand obtained is a film, a tape, a sheet, a round profile, a rectangular profile or a complex profile.

9. Device which is intended for the production of a fibre-composite material and which comprises the following elements:
a) a spreader device by way of which a fibre layer can be introduced into a chamber and at the same time can be spread to a width greater than that of the final product, at least by a factor of 1.2;
b)following in the direction of transport, one or more applicator nozzles which can apply melt to the spread fibre layer;
c) in the transport duct, a subsequent cross-section narrowing which can bring the wetted fibre layer at least to the cross section of the take-off die;
d) a subsequent deflection point providing deflection by 5 to 60°;
e) a relaxation zone and
f) a take-off die.

10. Device according to Claim 9, **characterized in that** the spreader device can spread the fibre layer to an extent such that its average thickness corresponds to 1 to 50 times the filament diameter.

11. Device according to Claim 9 or 10, characterized that in the element c) the width of the wetted fibre layer can be reduced to a cross section that is smaller than the cross section of the take-off die, and additionally, either prior to or after the deflection point according to element d), the width of the wetted fibre layer can be brought to the cross section of the take-off die.

12. Device according to any of Claims 9 to 11, **characterized in that** the radius of the deflection at the deflection point is 2 to 90 mm.

13. Device according to any of Claims 9 to 12, **characterized in that** the element d) comprises a single deflection point.

14. Device according to any of Claims 9 to 13, **characterized in that** it comprises a plurality of chambers, and it is possible here that the substrands are brought together at the deflection point or after the deflection point.

## Revendications

1. Procédé de fabrication d'un matériau composite fibreux, qui contient les étapes suivantes :
a) une couche de fibres est introduite dans un dispositif d'étalement (20) et davantage étalée d'au moins un facteur de 1,2 par rapport à la largeur du produit final, la couche de fibres étant étalée de telle sorte que son épaisseur moyenne corresponde à 1 à 50 fois le diamètre filamentaire,
b) à l'état dispersé, une masse fondue est appliquée au moyen d'au moins une buse d'application (60) ;
c) au moyen d'un rétrécissement de section, l'outil amène la largeur de la couche de fibres mouillée au moins à la section avec laquelle le produit quitte la buse de retrait ; puis
d) un rayon dévie les fibres mouillées d'un angle de 5 à 60° ;
e) une zone de repos (68) uniformise la distribution des fibres à une hauteur unitaire ;
f) le premier façonnage a lieu par une buse de retrait (70) au niveau de l'extrémité de l'outil.

2. Procédé selon la revendication 1, **caractérisé en ce qu'**à l'étape c), la largeur de la couche de fibres mouillée est ramenée à une section qui est inférieure à la section avec laquelle le produit quitte la buse de retrait, et en outre, avant ou après l'étape d), la largeur de la couche de fibres mouillée est amenée à la section avec laquelle le produit quitte la buse de retrait.

3. Procédé selon l'une quelconque des revendications précédentes, **caractérisé en ce que** la matrice du matériau composite est un matériau de moulage thermoplastique, un duroplaste, un système hybride thermoplaste-duroplaste, un élastomère thermoplastique ou un élastomère réticulé.

4. Procédé selon l'une quelconque des revendications précédentes, **caractérisé en ce que** le rayon de la déviation est de 2 à 90 mm à l'étape d).

5. Procédé selon l'une quelconque des revendications précédentes, **caractérisé en ce qu'**une seule déviation est présente à l'étape d).

6. Procédé selon l'une quelconque des revendications précédentes, **caractérisé en ce que** le boudin obtenu à la sortie de la buse de retrait est calandré.

7. Procédé selon l'une quelconque des revendications précédentes, **caractérisé en ce que** le boudin obtenu est découpé en un granulat de bâtonnets renforcé par des fibres longues d'une longueur de 4 à 60 mm.

8. Procédé selon l'une quelconque des revendications 1 à 7, **caractérisé en ce que** le boudin obtenu est un film, un ruban, une plaque, un profilé rond, un profilé rectangulaire ou un profilé complexe.

9. Dispositif pour la fabrication d'un matériau composite fibreux, qui contient les éléments suivants :
a) un dispositif d'étalement, par lequel une couche de fibres peut être introduite dans une chambre et simultanément être davantage étalée d'au moins un facteur de 1,2 par rapport à la largeur du produit final ;
b) à la suite dans la direction du transport, une ou plusieurs buses d'application, avec lesquelles une masse fondue peut être appliquée sur la couche de fibres étalée ;
c) un rétrécissement de section ultérieur du canal de transport, par lequel la couche de fibres mouillée peut être amenée au moins à la section de la buse de retrait,
d) un emplacement de déviation ultérieur d'une déviation de 5 à 60° ;
e) une zone de repos, et
f) une buse de retrait.

10. Dispositif selon la revendication 9, **caractérisé en ce qu'**avec le dispositif d'étalement, la couche de fibres peut être étalée de telle sorte que son épaisseur moyenne corresponde à 1 à 50 fois le diamètre filamentaire.

11. Dispositif selon l'une quelconque des revendications 9 et 10, **caractérisé en ce que** dans l'élément c), la largeur de la couche de fibres mouillée peut être ramenée à une section qui est inférieure à la section de la buse de retrait et en outre, avant ou après l'emplacement de déviation selon l'élément d), la largeur de la couche de fibres mouillée peut être amenée à la section de la buse de retrait.

12. Dispositif selon l'une quelconque des revendications 9 à 11, **caractérisé en ce qu'**à l'emplacement de déviation, le rayon de la déviation est de 2 à 90 mm.

13. Dispositif selon l'une quelconque des revendications 9 à 12, **caractérisé en ce qu'**un seul emplacement de déviation est présent dans l'élément d).

14. Dispositif selon l'une quelconque des revendications 9 à 13, **caractérisé en ce qu'**il contient plusieurs chambres, les boudins partiels pouvant être rassemblés au niveau de l'emplacement de déviation ou après l'emplacement de déviation.
